# EUROPEAN PATENT SPECIFICATION

(11) **EP 4 224 056 B1**
(45) Date of publication and mention of the grant of the patent: **21.08.2024**
(21) Application number: 22789825.1
(22) Date of filing: 08.04.2022
(51) Int. Cl.: F21S 41/24, F21S 2/00, F21S 43/14, F21S 43/239, F21S 43/245, F21S 43/249, F21V 8/00

(54) **LIGHT GUIDE DEVICE AND LIGHT EMITTING SYSTEM**
LICHTLEITERVORRICHTUNG UND LICHTAUSGABESYSTEM
DISPOSITIF DE GUIDAGE DE LUMIÈRE ET SYSTÈME ÉMETTEUR DE LUMIÈRE

(30) Priority: 21.12.2021 CN 202111568183
(43) Date of publication of application: 09.08.2023
(73) Proprietor: Changzhou Xingyu Automotive Lighting Systems Co., Ltd., Xinbei District Changzhou Jiangsu 213022 (CN)
(72) Inventor: WANG, Hui, Changzhou, Jiangsu 213022 (CN); ZHU, Caiping, Changzhou, Jiangsu 213022 (CN); SHI, Hongjian, Changzhou, Jiangsu 213022 (CN); WANG, Siqing, Changzhou, Jiangsu 213022 (CN); ZHUO, Xiaomin, Changzhou, Jiangsu 213022 (CN)
(74) Representative: Frick, Robert
(86) International application number: PCT/CN2022/085726
(87) International publication number: WO 2023/115755

(56) References cited:
- EP-A1- 3 115 685
- EP-A1- 3 163 157
- CN-A- 103 511 911
- CN-A- 110 319 419
- CN-U- 203 810 287
- CN-U- 208 107 969
- CN-U- 214 369 894
- DE-A1- 102017 128 841
- JP-A- 2006 301 518
- JP-A- 2009 152 152
- JP-A- 2013 165 044
- JP-A- 2014 182 939
- JP-A- 2014 199 763
- JP-A- 2018 198 155
- JP-A- H10 173 870
- US-A- 5 711 592
- US-A1- 2010 284 202
- US-A1- 2017 336 041

## Description

### TECHNICAL FIELD

The present invention relates to the technical field of automobile lamps, and in particular, to a light guide device and a light output system.

### BACKGROUND

With the evolution of automobiles, structures such as the chassis and body of an automobile are becoming more and more mature, and it is increasingly difficult to be differentiated. Therefore, the importance of competition in appearance differentiation, including automobile lamps, grows. How to achieve more complex lighting effects with fewer light sources is highlighted in the research.

Light guides, capable of total reflection and having advantages such as high energy utilization, are often used in lighting systems of automobile lamps. However, uneven brightness occurs when the angle between the extension direction of the light guide plate and the light-emitting direction of the light source is too large (that is, the angle exceeds 15°), resulting in that the end near the light source is brighter while the end far away from the light source is darker, which affects the visual appearance.

CN 214 369 894 U discloses a light guide device of the generic kind.

### SUMMARY

Technical problem to be solved: In order to solve the technical problem of uneven brightness of the light guide plate in the prior art, the present invention provides a light guide device, so that the light guide plate can be uniformly illuminated.

The present invention solves the technical problem by using a light guiding device as defined in claim 1.

Alight guide device is provided, which includes light sources and a light guide plate. A bottom end of the light guide plate faces the light sources and is provided with a light uniformization structure. The light uniformization structure is fixedly connected to the light guide plate. The light guide plate includes a main body, a first inclined portion, and a second inclined portion. The first inclined portion and the second inclined portion are respectively located on left and right sides of the main body. The first inclined portion and the second inclined portion are both fixedly connected to the main body, and top sides of the first inclined portion and the second inclined portion are both higher than a top side of the main body. The light uniformization structure includes a first light uniformization portion, a second light uniformization portion, and a third light uniformization portion. The first light uniformization portion and the third light uniformization portion are respectively located on left and right sides of the second light uniformization portion. The first light uniformization portion and the third light uniformization portion are both fixedly connected to the second light uniformization portion. The first light uniformization portion is configured for diverging light from the light sources to the first inclined portion, the third light uniformization portion is configured for diverging light from the light sources to the second inclined portion, and the second light uniformization portion is configured for diverging light from the light sources to the main body.

Further, the first light uniformization portion includes a plurality of first light uniformization units, and the plurality of first light uniformization units are sequentially connected end to end, wherein each of the first light uniformization units includes a first connection surface, a first light incident surface, a second light incident surface, a third light incident surface, a second connection surface, and a first reflecting surface; the first connection surface, the first light incident surface, the second light incident surface, the third light incident surface, the second connection surface, and the first reflecting surface are connected in order from left to right.

Further, the first light incident surface and the second connection surface are both horizontal surfaces, and the first connection surface, the second light incident surface, the third light incident surface, and the first reflecting surface are all inclined surfaces; the second light incident surface and the third light incident surface are inclined in opposite directions, and the second light incident surface and the third light incident surface are connected via an arc surface depressed away from the light source; the first connection surface and the third light incident surface are inclined in an identical direction, and the first reflecting surface and the second light incident surface are inclined in an identical direction.

In an embodiment, the first reflecting surface of the previous first light uniformization unit is connected to the first connection surface of the next first light uniformization unit via the first horizontal surface; and the first reflecting surface, the first horizontal surface, and the first connection surface form a structure depressed toward the main body.

In an embodiment, the third light uniformization portion includes a plurality of third light uniformization units, and the plurality of third light uniformization units are sequentially connected end to end, wherein each of the third light uniformization units includes a third connection surface, a fourth light incident surface, a fifth light incident surface, a sixth light incident surface, a fourth connection surface, and a second reflecting surface; the third connection surface, the fourth light incident surface, the fifth light incident surface, the sixth light incident surface, the fourth connection surface, and the second reflecting surface are connected in order from right to left.

In an embodiment, the fourth light incident surface and the fourth connection surface are both horizontal surfaces, and the third connection surface, the fifth light incident surface, the sixth light incident surface, and the second reflecting surface are all inclined surfaces; the fifth light incident surface and the sixth light incident surface are inclined in opposite directions, and the fifth light incident surface and the sixth light incident surface are connected via an arc surface depressed away from the light source; the third connection surface and the sixth light incident surface are inclined in an identical direction, and the second reflecting surface and the fifth light incident surface are inclined in an identical direction.

In an embodiment, the second reflecting surface of the previous third light uniformization unit is connected to the third connection surface of the next third light uniformization unit via the second horizontal surface; and the second reflecting surface, the second horizontal surface, and the third connection surface form a structure depressed toward the main body.

In an embodiment, the first inclined portion and the first connection surface are inclined in an identical direction, the second inclined portion and the third connection surface are inclined in an identical direction, and the first connection surface and the third connection surface are inclined in opposite directions.

According to the invention, a plane perpendicular to the light guide plate serves as a reference plane Y and the reference plane Y is a vertical plane. In an embodiment, the first connection surface and the third connection surface each form an angle A with the reference plane Y, and the first inclined portion and the second inclined portion each form an angle B with the reference plane Y, wherein the angle A is larger than the angle B.

In an embodiment, the third light incident surface and the sixth light incident surface each form an angle C with the reference plane Y, and the first reflecting surface and the second reflecting surface each form an angle D with the reference plane Y, wherein the angle C is larger than the angle D; the first reflecting surface is higher than the third light incident surface, and the second reflecting surface is higher than the sixth light incident surface.

In an embodiment, a front side surface of the light uniformization structure is provided with a diffusion pattern.

In an embodiment, a uniformization layer is further provided between the light uniformization structure and the light sources.

The present invention further relates to a light output system including a back plate and the light guide device, wherein the back plate is connected to the light guide plate.

The present invention has the following beneficial effects: According to the light guide device of the present invention, the light uniformization structure is provided so that the first light uniformization portion diverges light from the light sources to the first inclined portion and the third light uniformization portion diverges light from the light sources to the second inclined portion. Therefore, the top sides of the light guide plate with large inclination angles (that is, the ends away from the light sources) can also be illuminated, the overall brightness of the light guide plate remains uniform, and a better visual effect is presented.

### BRIEF DESCRIPTION OF THE DRAWINGS

The present invention is further described below with reference to the accompanying drawings and embodiments.
FIG. 1 is a schematic structural diagram of a light guide device of the present invention.
FIG. 2 is a schematic diagram of light traveling in the light guide device of the present invention.
FIG. 3 is an enlarged view of a first light uniformization unit in the present invention.
FIG. 4 is a schematic diagram of light traveling in the first light uniformization unit in the present invention.
FIG. 5 is an enlarged view of a third light uniformization unit in the present invention.
FIG. 6 is a schematic diagram of light traveling in the third light uniformization unit in the present invention.
FIG. 7 is a sectional view of a light guide plate in the present invention.
FIG. 8 is an enlarged view of a second light uniformization unit in the present invention.

In the figures: 1. light source, 2. light guide plate, 3. light uniformization structure, 4. diffusion pattern, 21. main body, 22. first inclined portion, 23. second inclined portion, 31. first light uniformization portion, 32. second light uniformization portion, 33. third light uniformization portion, 34. first light uniformization unit, 341. first connection surface, 342. first light incident surface, 343. second light incident surface, 344. third light incident surface, 345. second connection surface, 346. first reflecting surface, 347. first horizontal surface, 35. third light uniformization unit, 351. third connection surface, 352. fourth light incident surface, 353. fifth light incident surface, 354. sixth light incident surface, 355. fourth connection surface, 356. second reflecting surface, 357. second horizontal surface, 36. second light uniformization unit.

### DETAILED DESCRIPTION OF THE EMBODIMENTS

The present invention is further described in detail below with reference to the accompanying drawings. The accompanying drawings are simplified and illustrate the basic structure of the present invention in a schematic way, so they only show constitutions related to the present invention.

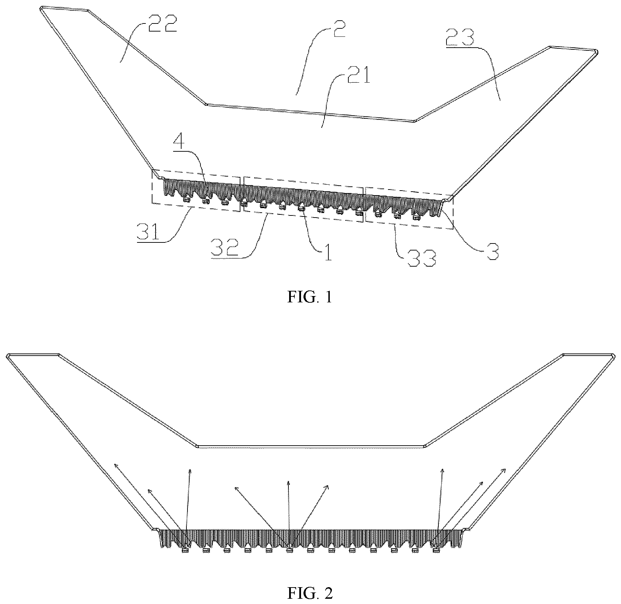

As shown in FIG. 1 and FIG. 2, a light guide device includes light sources 1 and a light guide plate 2. A plurality of light sources 1 can be provided. The light source 1 may be, for example, a light-emitting diode (LED) with a conical beam angle and can emit light beams of different angles at the same time. One end of the light guide plate 2 faces the light sources 1 and is provided with a light uniformization structure 3, and the light uniformization structure 3 is fixedly connected to the light guide plate 2. The plurality of light sources 1 may be arranged right below the light guide plate 2, and the light-emitting sides of the light sources 1 directly face the light uniformization structure 3 of the light guide plate 2. The light guide plate 2 includes a main body 21, a first inclined portion 22, and a second inclined portion 23. The first inclined portion 22 and the second inclined portion 23 are respectively located on left and right sides of the main body 21. The first inclined portion 22 and the second inclined portion 23 are both fixedly connected to the main body 21, and top sides of the first inclined portion 22 and the second inclined portion 23 are both higher than a top side of the main body 21. In other words, the entire light guide plate 2 is U-shaped, and the left and right sides of the light guide plate 2 are inclined.

The light uniformization structure 3 includes a first light uniformization portion 31, a second light uniformization portion 32, and a third light uniformization portion 33. The first light uniformization portion 31 and the third light uniformization portion 33 are respectively located on left and right sides of the second light uniformization portion 32, and the first light uniformization portion 31 and the third light uniformization portion 33 are both fixedly connected to the second light uniformization portion 32. For example, the first light uniformization portion 31, the second light uniformization portion 32, and the third light uniformization portion 33 are integrally formed, and the second light uniformization portion 32 is located between the first light uniformization portion 31 and the third light uniformization portion 33. The first light uniformization portion 31 and the third light uniformization portion 33 are symmetrically arranged on left and right sides about the vertical center line of the second light uniformization portion 32. The first light uniformization portion 31, the second light uniformization portion 32, and the third light uniformization portion 33 receive the light beams emitted by the light sources 1. For example, the first light uniformization portion 31 is configured for diverging light from the light sources 1 to the first inclined portion 22, the third light uniformization portion 33 is configured for diverging light from the light sources 1 to the second inclined portion 23, and the second light uniformization portion 32 is configured for diverging light from the light sources 1 to the main body 21. Specifically, the first light uniformization portion 31 and the third light uniformization portion 33 can reflect light with larger angles from the light sources 1, so that the overall lighting effect of the light guide plate 2 becomes more uniform.

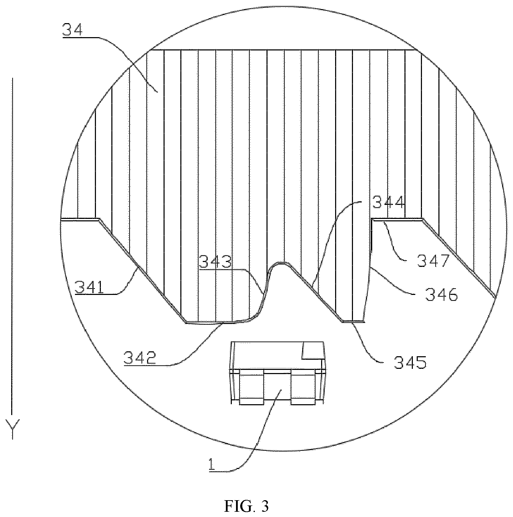

As shown in FIG. 3, the first light uniformization portion 31 includes a plurality of first light uniformization units 34, and the plurality of first light uniformization units 34 are sequentially connected end to end. Each of the first light uniformization units 34 includes a first connection surface 341, a first light incident surface 342, a second light incident surface 343, a third light incident surface 344, a second connection surface 345, and a first reflecting surface 346. The first connection surface 341, the first light incident surface 342, the second light incident surface 343, the third light incident surface 344, the second connection surface 345, and the first reflecting surface 346 are connected in order from left to right. The first light incident surface 342 and the second connection surface 345 are both horizontal surfaces, and the first connection surface 341, the second light incident surface 343, the third light incident surface 344, and the first reflecting surface 346 are all inclined surfaces. The second light incident surface 343 and the third light incident surface 344 are inclined in opposite directions, and the second light incident surface 343 and the third light incident surface 344 are connected via an arc surface depressed away from the light source 1. The first connection surface 341 and the third light incident surface 344 are inclined in an identical direction, and the first reflecting surface 346 and the second light incident surface 343 are inclined in an identical direction. In this way, all the light of different angles from the light source 1 enters the first light uniformization unit 34. The first reflecting surface 346 of the previous first light uniformization unit 34 is connected to the first connection surface 341 of the next first light uniformization unit 34 via the first horizontal surface 347. The first reflecting surface 346, the first horizontal surface 347, and the first connection surface 341 form a structure depressed toward the main body 21.

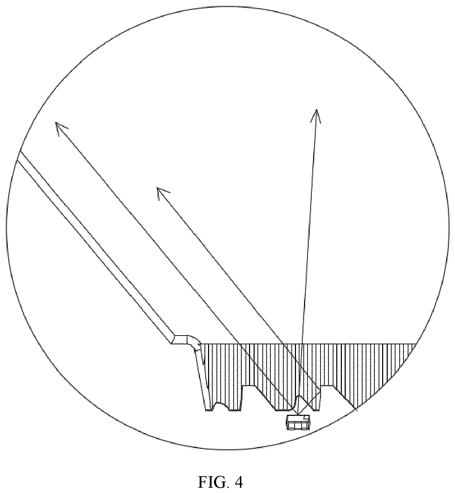

Specifically, the light source 1 is provided below each of the first light uniformization units 34, and the light source 1 is arranged as close as possible to the first light uniformization unit 34. As shown in FIG. 4, when the light source 1 emits light beams of different angles, the light beams emitted by the light source 1 to the left are first light beams, the light beams emitted by the light source 1 to the center are second light beams, and the light beams emitted by the light source 1 to the right are third light beams. The first light beams enter the light guide plate 2 through the first light incident surface 342 and the second light incident surface 343, the second light beams enter the light guide plate 2 through the second light incident surface 343 and the third light incident surface 344, and the third light beams enter the light uniformization structure 3 through the third light incident surface 344 and are reflected by the first reflecting surface 346 into the light guide plate 2. Through the structural design of the light uniformization unit, light of different angles emitted by the light source 1 enters the light guide plate 2 and more light is emitted toward the first inclined portion 22, so that the overall brightness of the light guide plate 2 becomes more uniform.

Specifically, in the first light uniformization unit 34, the first connection surface 341 and the third light incident surface 344 are inclined leftward, the second light incident surface 343 and the first reflecting surface 346 are inclined rightward, and the inclination angle of the first reflecting surface 346 shall not be too large in order to ensure the reflecting effect.

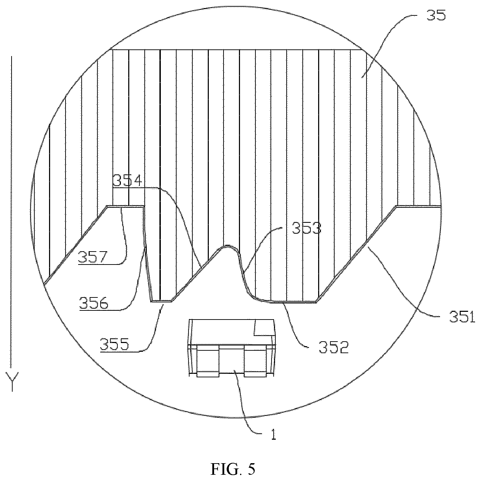

As shown in FIG. 5, the third light uniformization portion 33 includes a plurality of third light uniformization units 35, and the plurality of third light uniformization units 35 are sequentially connected end to end. Each of the third light uniformization units 35 includes a third connection surface 351, a fourth light incident surface 352, a fifth light incident surface 353, a sixth light incident surface 354, a fourth connection surface 355, and a second reflecting surface 356. The third connection surface 351, the fourth light incident surface 352, the fifth light incident surface 353, the sixth light incident surface 354, the fourth connection surface 355, and the second reflecting surface 356 are connected in order from right to left. The fourth light incident surface 352 and the fourth connection surface 355 are both horizontal surfaces, and the third connection surface 351, the fifth light incident surface 353, the sixth light incident surface 354, and the second reflecting surface 356 are all inclined surfaces. The fifth light incident surface 353 and the sixth light incident surface 354 are inclined in opposite directions, and the fifth light incident surface 353 and the sixth light incident surface 354 are connected via an arc surface depressed away from the light source 1. The third connection surface 351 and the sixth light incident surface 354 are inclined in an identical direction, and the second reflecting surface 356 and the fifth light incident surface 353 are inclined in an identical direction. In this way, all the light of different angles from the light source 1 enters the third light uniformization unit 35. The second reflecting surface 356 of the previous third light uniformization unit 35 is connected to the third connection surface 351 of the next third light uniformization unit 35 via the second horizontal surface 357. The second reflecting surface 356, the second horizontal surface 357, and the third connection surface 351 form a structure depressed toward the main body 21. In other words, the third light uniformization unit 35 has the same structure as the first light uniformization unit 34. However, the third light uniformization unit 35 and the first light uniformization unit 34 are symmetrically arranged on left and right sides about the center line of the main body 21.

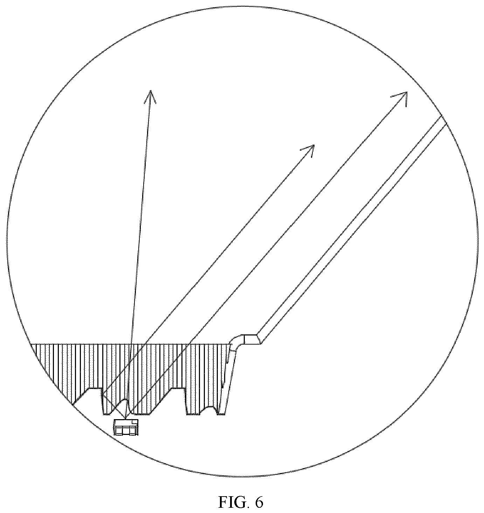

Similarly, the light source 1 is provided below each of the third light uniformization units 35, and the light source 1 is arranged as close as possible to the third light uniformization unit 35. As shown in FIG. 6, when the light source 1 emits light beams of different angles, the first light beams enter the light guide plate 2 through the fourth light incident surface 352 and the fifth light incident surface 353, the second light beams enter the light guide plate 2 through the fifth light incident surface 353 and the sixth light incident surface 354, and the third light beams enter the light uniformization structure 3 through the sixth light incident surface 354 and are reflected by the second reflecting surface 356 into the light guide plate 2. Through the structural design of the light uniformization unit, light of different angles emitted by the light source 1 enters the light guide plate 2 and more light is emitted toward the second inclined portion 23, so that the overall brightness of the light guide plate 2 becomes more uniform. Specifically, in the third light uniformization unit 35, the third connection surface 351 and the sixth light incident surface 354 are inclined leftward, the fifth light incident surface 353 and the second reflecting surface 356 are inclined rightward, and the inclination angle of the second reflecting surface 356 shall not be too large in order to ensure the reflecting effect.

Further, the first inclined portion 22 and the first connection surface 341 are inclined in an identical direction, the second inclined portion 23 and the third connection surface 351 are inclined in an identical direction, and the first connection surface 341 and the third connection surface 351 are inclined in opposite directions. A plane perpendicular to the light guide plate 2 serves as a reference plane Y and the reference plane Y is a vertical plane. The first connection surface 341 and the third connection surface 351 each form an angle A with the reference plane Y, and the first inclined portion 22 and the second inclined portion 23 each form an angle B with the reference plane Y, wherein the angle A is larger than the angle B. In other words, the inclination angle of the first connection surface 341 is larger than the inclination angle of the first inclined portion 22, and the inclination angle of the third connection surface 351 is larger than the inclination angle of the second inclined portion 23, which prevents leakage of light in the case of large emitting angles of the light source 1 as well as direct output of light through the first connection surface 341 and the third connection surface 351 after the light is reflected by the first reflecting surface 346 and the second reflecting surface 356. For example, the angle between the first inclined portion 22 and the horizontal plane may be 40°-70°, and the angle between the second inclined portion 23 and the horizontal plane may be 40°-70°.

A plane perpendicular to the light guide plate 2 serves as a reference plane Y and the reference plane Y is a vertical plane. The third light incident surface 344 and the sixth light incident surface 354 each form an angle C with the reference plane Y, and the first reflecting surface 346 and the second reflecting surface 356 each form an angle D with the reference plane Y, wherein the angle C is larger than the angle D. The first reflecting surface 346 is higher than the third light incident surface 344, and the second reflecting surface 356 is higher than the sixth light incident surface 354. In this way, in the first light uniformization unit 34, the light beams emitted rightward from the light source 1 are reflected by the first reflecting surface 346 and then redirected to the first inclined portion 22; while in the third light uniformization unit 35, the light beams emitted leftward from the light source 1 are reflected by the second reflecting surface 356 and then redirected to the second inclined portion 23. Therefore, the parts of the light guide plate 2 far away from the light sources 1 can also be illuminated, and the entire light guide plate 2 achieves a uniform lighting effect.

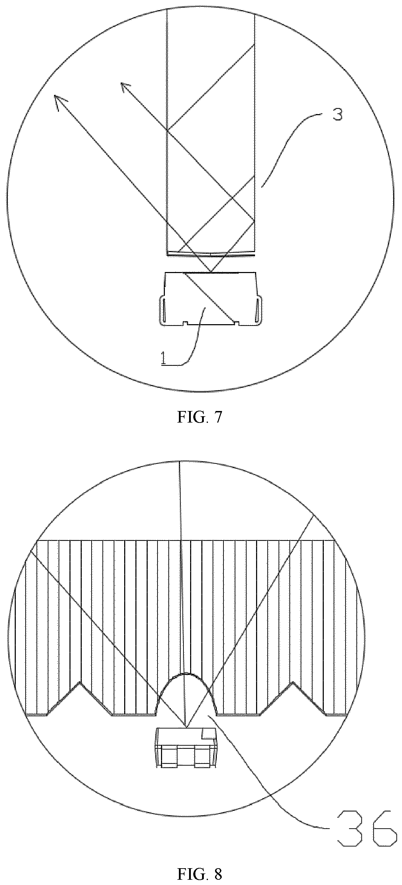

As shown in FIG. 8, the second light uniformization portion 32 includes a plurality of second light uniformization units 36, and the plurality of second light uniformization units 36 are sequentially connected end to end. The second light uniformization units 36 may be semielliptic and every two adjacent second light uniformization units 36 are connected via inclined surfaces. The light source 1 is provided below each of the second light uniformization units 36. The second light uniformization unit 36 has a width matched with that of the light-emitting side of the light source 1 and is configured for diverging the light emitted by the light source 1.

In this embodiment, a side surface of the light uniformization structure 3 is provided with a diffusion pattern 4. Specifically, the diffusion pattern 4 is disposed at a front side surface of the light uniformization structure 3. Referring to FIG. 7, since the beam angle of the light source 1 is conical and the light guide plate 2 and the light uniformization structure 3 have certain thickness, a part of the light emitted by the light source 1 can be directly output from the front side surface of the light uniformization structure 3, and a part of the light can be reflected by a rear side surface of the light uniformization structure 3 and then output from the front side surface of the light uniformization structure 3. When the light is output from the front side surface, the diffusion pattern 4 diffuses the light for illumination. The diffusion pattern 4 may be vertical stripes, waves, and so on, which is not limited herein and can be designed according to actual needs.

In this embodiment, a uniformization layer (not shown) is further provided between the light uniformization structure 3 and the light sources 1. The uniformization layer is configured for uniformizing the light emitted by the light sources 1 and is made of, for example, a material with good diffusion performance or good heat dissipation performance.

The present invention further provides a light output system including the light guide device and a back plate. The back plate is disposed on a rear side surface of the light guide plate 2 and is fixedly connected to the light guide plate 2. Specifically, the light guide plate is pink or transparent, so that when the red light emitted by the LED light source travels in the light guide plate, less light is absorbed and the light travels farther. The back plate is pink or white and is made of an opaque material which has a strong reflecting effect on the red light. Therefore, the utilization of light energy is improved and the output light is more uniform.

In view of the above, according to the light guide device of the present invention, the light uniformization structure 3 is disposed on the bottom side of the light guide plate 2, and the first light uniformization portion 31 and the third light uniformization portion 33 are symmetrically arranged on the left and right sides about the center line of the second light uniformization portion 32; therefore, a part of the light emitted by the light sources 1 can be reflected and diverged by the first light uniformization portion 31 and the third light uniformization portion 33 to the two inclined portions, so that the top sides of the inclined portions on two sides of the light guide plate 2 can also be uniformly illuminated and the entire light guide plate 2 achieves a uniform lighting effect.

## Claims

1. A light guide device, comprising
light sources (1); and
a light guide plate (2) comprising a front side and a back side, wherein a plane perpendicular to the light guide plate (2) serves as a reference plane Y and the reference plane Y is a vertical plane;
wherein a bottom end of the light guide plate (2) faces the light sources (1) and is provided with a light uniformization structure (3) extending from the left to the right in a horizontal direction, and the light uniformization structure (3) is fixedly connected to the light guide plate (2); the light guide plate (2) comprises a main body (21) and a a first inclined portion (22), and the light guide plate (2) being **characterized by** comprising
a second inclined portion (23), the first inclined portion (22) and the second inclined portion (23) are respectively located on left and right sides of the main body (21), the first inclined portion (22) and the second inclined portion (23) are both fixedly connected to the main body (21), and top sides of the first inclined portion (22) and the second inclined portion (23) are both higher than a top side of the main body (21);
wherein the light uniformization structure (3) comprises a first light uniformization portion (31), a second light uniformization portion (32), and a third light uniformization portion (33), the first light uniformization portion (31) and the third light uniformization portion (33) are respectively located on left and right sides of the second light uniformization portion (32), and the first light uniformization portion (31) and the third light uniformization portion (33) are both fixedly connected to the second light uniformization portion (32);
wherein the first light uniformization portion (31) is configured for diverging light from the light sources (1) to the first inclined portion (22), the third light uniformization portion (33) is configured for diverging light from the light sources (1) to the second inclined portion (23), and the second light uniformization portion (32) is configured for diverging light from the light sources (1) to the main body (21);
wherein the first light uniformization portion (31) comprises a plurality of first light uniformization units (34), and the plurality of first light uniformization units (34) are sequentially connected end to end, wherein each of the first light uniformization units (34) comprises a first connection surface (341), a first light incident surface (342), a second light incident surface (343), a third light incident surface (344), a second connection surface (345), and a first reflecting surface (346); the first connection surface (341), the first light incident surface (342), the second light incident surface (343), the third light incident surface (344), the second connection surface (345), and the first reflecting surface (346) are connected in order from left to right; and
wherein the first light incident surface (342) and the second connection surface (345) are both horizontal surfaces, and the first connection surface (341), the second light incident surface (343), the third light incident surface (344), and the first reflecting surface (346) are all inclined surfaces; the second light incident surface (343) and the third light incident surface (344) are inclined in opposite directions, and the second light incident surface (343) and the third light incident surface (344) are connected via an arc surface depressed away from the light source (1); the first connection surface (341) and the third light incident surface (344) are inclined in an identical direction, and the first reflecting surface (346) and the second light incident surface (343) are inclined in an identical direction.

2. The light guide device according to claim 1, **characterized in that** any first reflecting surface (346) of a previous first light uniformization unit (34) is connected to the first connection surface (341) of the next first light uniformization unit (34) via a first horizontal surface (347); and the first reflecting surface (346), the first horizontal surface (347), and the first connection surface (341) form a structure depressed toward the main body (21).

3. The light guide device according to claim 1, **characterized in that** the third light uniformization portion (33) comprises a plurality of third light uniformization units (35), and the plurality of third light uniformization units (35) are sequentially connected end to end, wherein each of the third light uniformization units (35) comprises a third connection surface (351), a fourth light incident surface (352), a fifth light incident surface (353), a sixth light incident surface (354), a fourth connection surface (355), and a second reflecting surface (356); the third connection surface (351), the fourth light incident surface (352), the fifth light incident surface (353), the sixth light incident surface (354), the fourth connection surface (355), and the second reflecting surface (356) are connected in order from right to left.

4. The light guide device according to claim 3, **characterized in that** the fourth light incident surface (352) and the fourth connection surface (355) are both horizontal surfaces, and the third connection surface (351), the fifth light incident surface (353), the sixth light incident surface (354), and the second reflecting surface (356) are all inclined surfaces; the fifth light incident surface (353) and the sixth light incident surface (354) are inclined in opposite directions, and the fifth light incident surface (353) and the sixth light incident surface (354) are connected via an arc surface depressed away from the light source (1); the third connection surface (351) and the sixth light incident surface (354) are inclined in an identical direction, and the second reflecting surface (356) and the fifth light incident surface (353) are inclined in an identical direction.

5. The light guide device according to claim 4, **characterized in that** the second reflecting surface (356) of any previous third light uniformization unit (35) is connected to the third connection surface (351) of the next third light uniformization unit (35) via a second horizontal surface (357); and the second reflecting surface (356), the second horizontal surface (357), and the third connection surface (351) form a structure depressed toward the main body (21).

6. The light guide device according to claim 4, **characterized in that** the first inclined portion (22) and the first connection surface (341) are inclined in an identical direction, the second inclined portion (23) and the third connection surface (351) are inclined in an identical direction, and the first connection surface (341) and the third connection surface (351) are inclined in opposite directions.

7. The light guide device according to claim 6, **characterized in that** the first connection surface (341) and the third connection surface (351) each form an angle A with the reference plane Y, and the first inclined portion (22) and the second inclined portion (23) each form an angle B with the reference plane Y, wherein the angle A is larger than the angle B.

8. The light guide device according to claim 4, **characterized in that** the third light incident surface (344) and the sixth light incident surface (354) each form an angle C with the reference plane Y, and the first reflecting surface (346) and the second reflecting surface (356) each form an angle D with the reference plane Y, wherein the angle C is larger than the angle D; the first reflecting surface (346) is higher than the third light incident surface (344), and the second reflecting surface (356) is higher than the sixth light incident surface (354).

9. The light guide device according to claim 1, **characterized in that** a front side surface of the light uniformization structure (3) is provided with a diffusion pattern (4).

10. The light guide device according to claim 1, **characterized in that** a uniformization layer is further provided between the light uniformization structure (3) and the light sources (1).

11. Alight output system, **characterized by** comprising a back plate and the light guide device according to any one of claims 1-10, wherein the back plate is connected to the light guide plate.

## Patentansprüche

1. Lichtleitvorrichtung, umfassend
Lichtquellen (1) und
eine Lichtleiterplatte (2), die eine Vorderseite und eine Rückseite aufweist, wobei eine Ebene senkrecht zu der Lichtleiterplatte (2) als eine Referenzebene Y dient und die Referenzebene Y eine vertikale Ebene ist,
wobei ein unteres Ende der Lichtleiterplatte (2) den Lichtquellen (1) zugewandt ist und mit einer Lichtvergleichmäßigungsstruktur (3) versehen ist, die sich von links nach rechts in einer horizontalen Richtung erstreckt, wobei die Lichtvergleichmäßigungsstruktur (3) mit der Lichtleiterplatte (2) fest verbunden ist; wobei die Lichtleiterplatte (2) einen Hauptkörper (21) und einen ersten geneigten Abschnitt (22) umfasst, **dadurch gekennzeichnet ist, dass** die Lichtleitplatte (2) ferner einen zweiten geneigten Abschnitt (23) umfasst, wobei der erste geneigte Abschnitt (22) und der zweite geneigte Abschnitt (23) jeweils auf der linken und rechten Seite des Hauptkörpers (21) angeordnet sind, wobei der erste geneigte Abschnitt (22) und der zweite geneigte Abschnitt (23) beide fest mit dem Hauptkörper (21) verbunden sind, wobei die Oberseiten des ersten geneigten Abschnitts (22) und des zweiten geneigten Abschnitts (23) beide höher als eine Oberseite des Hauptkörpers (21) sind;
wobei die Lichtvergleichmäßigungsstruktur (3) einen ersten Lichtvergleichmäßigungsabschnitt (31), einen zweiten Lichtvergleichmäßigungsabschnitt (32) und einen dritten Lichtvergleichmäßigungsabschnitt (33) umfasst, wobei der erste Lichtvergleichmäßigungsabschnitt (31) und der dritte Lichtvergleichmäßigungsabschnitt (33) jeweils auf der linken und der rechten Seite des zweiten Lichtvergleichmäßigungsabschnitts (32) angeordnet sind, und wobei der erste Lichtvergleichmäßigungsabschnitt (31) und der dritte Lichtvergleichmäßigungsabschnitt (33) beide fest mit dem zweiten Lichtvergleichmäßigungsabschnitt (32) verbunden sind;
wobei der erste Lichtvergleichmäßigungsabschnitt (31) so konfiguriert ist, dass er Licht von den Lichtquellen (1) zu dem ersten geneigten Abschnitt (22) ablenkt, der dritte Lichtvergleichmäßigungsabschnitt (33) so konfiguriert ist, dass er Licht von den Lichtquellen (1) zu dem zweiten geneigten Abschnitt (23) ablenkt, und der zweite Lichtvergleichmäßigungsabschnitt (32) so konfiguriert ist, dass er Licht von den Lichtquellen (1) zu dem Hauptkörper (21) ablenkt;
wobei der erste Lichtvergleichmäßigungsabschnitt (31) eine Vielzahl von ersten Lichtvergleichmäßigungseinheiten (34) umfasst und die Vielzahl von ersten Lichtvergleichmäßigungseinheiten (34) sequentiell Ende an Ende verbunden sind, wobei jede der ersten Lichtvergleichmäßigungseinheiten (34) eine erste Verbindungsfläche (341), eine erste Lichteinfallsfläche (342), eine zweite Lichteinfallsfläche (343), eine dritte Lichteinfallsfläche (344), eine zweite Verbindungsfläche (345) und eine erste reflektierende Fläche (346) umfasst; wobei die erste Verbindungsfläche (341), die erste Lichteinfallsfläche (342), die zweite Lichteinfallsfläche (343), die dritte Lichteinfallsfläche (344), die zweite Verbindungsfläche (345) und die erste reflektierende Fläche (346) in der Reihenfolge von links nach rechts verbunden sind; und
wobei die erste Lichteinfallsfläche (342) und die zweite Verbindungsfläche (345) beide horizontale Flächen sind, wobei die erste Verbindungsfläche (341), die zweite Lichteinfallsfläche (343), die dritte Lichteinfallsfläche (344) und die erste reflektierende Fläche (346) alle geneigte Flächen sind; wobei die zweite Lichteinfallsfläche (343) und die dritte Lichteinfallsfläche (344) in entgegengesetzte Richtungen geneigt sind, wobei die zweite Lichteinfallsfläche (343) und die dritte Lichteinfallsfläche (344) über eine Bogenfläche verbunden sind, die von der Lichtquelle (1) weggedrückt ist; wobei die erste Verbindungsfläche (341) und die dritte Lichteinfallsfläche (344) in eine identische Richtung geneigt sind und die erste reflektierende Fläche (346) und die zweite Lichteinfallsfläche (343) in eine identische Richtung geneigt sind.

2. Lichtleitvorrichtung nach Anspruch 1, **dadurch gekennzeichnet, dass** eine erste reflektierende Fläche (346) einer vorherigen ersten Lichtvergleichmäßigungseinheit (34) mit der ersten Verbindungsfläche (341) der nächsten ersten Lichtvergleichmäßigungseinheit (34) über eine erste horizontale Oberfläche (347) verbunden ist; und wobei die erste reflektierende Fläche (346), die erste horizontale Oberfläche (347) und die erste Verbindungsfläche (341) eine Struktur bilden, die in Richtung des Hauptkörpers (21) eingedrückt ist.

3. Lichtleitvorrichtung nach Anspruch 1, **dadurch gekennzeichnet, dass** der dritte Lichtvergleichmäßigungsabschnitt (33) eine Vielzahl von dritten Lichtvergleichmäßigungseinheiten (35) umfasst und die Vielzahl von dritten Lichtvergleichmäßigungseinheiten (35) sequentiell Ende an Ende verbunden sind, wobei jede der dritten Lichtvergleichmäßigungseinheiten (35) eine dritte Verbindungsfläche (351), eine vierte Lichteinfallsfläche (352), eine fünfte Lichteinfallsfläche (353), eine sechste Lichteinfallsfläche (354), eine vierte Verbindungsfläche (355) und eine zweite reflektierende Fläche (356) umfasst; wobei die dritte Verbindungsfläche (351), die vierte Lichteinfallsfläche (352), die fünfte Lichteinfallsfläche (353), die sechste Lichteinfallsfläche (354), die vierte Verbindungsfläche (355) und die zweite Reflexionsfläche (356) in der Reihenfolge von rechts nach links verbunden sind.

4. Lichtleitvorrichtung nach Anspruch 3, **dadurch gekennzeichnet, dass** die vierte Lichteinfallsfläche (352) und die vierte Verbindungsfläche (355) beide horizontale Flächen sind, wobei die dritte Verbindungsfläche (351), die fünfte Lichteinfallsfläche (353), die sechste Lichteinfallsfläche (354) und die zweite Reflexionsfläche (356) alle geneigte Flächen sind; wobei die fünfte Lichteinfallsfläche (353) und die sechste Lichteinfallsfläche (354) in entgegengesetzte Richtungen geneigt sind und die fünfte Lichteinfallsfläche (353) und die sechste Lichteinfallsfläche (354) über eine Bogenfläche verbunden sind, die von der Lichtquelle (1) weggedrückt ist; wobei die dritte Verbindungsfläche (351) und die sechste Lichteinfallsfläche (354) in eine identische Richtung geneigt sind und die zweite reflektierende Fläche (356) und die fünfte Lichteinfallsfläche (353) in eine identische Richtung geneigt sind.

5. Lichtleitvorrichtung nach Anspruch 4, **dadurch gekennzeichnet, dass** die zweite reflektierende Fläche (356) einer vorherigen dritten Lichtvergleichmäßigungseinheit (35) mit der dritten Verbindungsfläche (351) der nächsten dritten Lichtvergleichmäßigungseinheit (35) über eine zweite horizontale Oberfläche (357) verbunden ist; wobei die zweite reflektierende Fläche (356), die zweite horizontale Oberfläche (357) und die dritte Verbindungsfläche (351) eine Struktur bilden, die in Richtung des Hauptkörpers (21) eingedrückt ist.

6. Lichtleitvorrichtung nach Anspruch 4, **dadurch gekennzeichnet, dass** der erste geneigte Abschnitt (22) und die erste Verbindungsfläche (341) in eine gleiche Richtung geneigt sind, der zweite geneigte Abschnitt (23) und die dritte Verbindungsfläche (351) in eine gleiche Richtung geneigt sind und die erste Verbindungsfläche (341) und die dritte Verbindungsfläche (351) in entgegengesetzte Richtungen geneigt sind.

7. Lichtleitvorrichtung nach Anspruch 6, **dadurch gekennzeichnet, dass** die erste Verbindungsfläche (341) und die dritte Verbindungsfläche (351) jeweils einen Winkel A mit der Bezugsebene Y bilden, wobei der erste geneigte Abschnitt (22) und der zweite geneigte Abschnitt (23) jeweils einen Winkel B mit der Bezugsebene Y bilden, und wobei der Winkel A größer als der Winkel B ist.

8. Lichtleitvorrichtung nach Anspruch 4, **dadurch gekennzeichnet, dass** die dritte Lichteinfallsfläche (344) und die sechste Lichteinfallsfläche (354) jeweils einen Winkel C mit der Bezugsebene Y bilden, und wobei die erste reflektierende Fläche (346) und die zweite reflektierende Fläche (356) jeweils einen Winkel D mit der Bezugsebene Y bilden, wobei der Winkel C größer als der Winkel D ist; wobei die erste reflektierende Fläche (346) höher als die dritte Lichteinfallsfläche (344) ist, und wobei die zweite reflektierende Fläche (356) höher als die sechste Lichteinfallsfläche (354) ist.

9. Lichtleitvorrichtung nach Anspruch 1, **dadurch gekennzeichnet, dass** eine vordere Seitenfläche der Lichtvergleichmäßigungsstruktur (3) mit einem Diffusionsmuster (4) versehen ist.

10. Lichtleitvorrichtung nach Anspruch 1, **dadurch gekennzeichnet, dass** zwischen der Lichtvergleichmäßigungsstruktur (3) und den Lichtquellen (1) außerdem eine Vergleichmäßigungsschicht vorgesehen ist.

11. Lichtausgabesystem, **dadurch gekennzeichnet, dass** es eine Rückplatte und die Lichtleitvorrichtung nach einem der Ansprüche 1-10 umfasst, wobei die Rückplatte mit der Lichtleitplatte verbunden ist.

## Revendications

1. Dispositif de guidage de lumière, comprenant
des sources lumineuses (1); et
une plaque de guidage de lumière (2) comprenant un côté avant et un côté arrière, dans lequel un plan perpendiculaire à la plaque de guidage de lumière (2) sert de plan de référence Y et le plan de référence Y est un plan vertical;
dans lequel une extrémité inférieure de la plaque de guidage de lumière (2) fait face aux sources lumineuses (1) et est pourvue d'une structure d'homogénéisation de lumière (3) s'étendant de gauche à droit dans un sens horizonal, et la structure d'homogénéisation de lumière (3) est reliée de manière fixe à la plaque de guidage de lumière (2); la plaque de guidage de lumière (2) comprend un corps principal (21) et une première portion inclinée (22), et la plaque de guidage de lumière (2) **se caractérisant en ce qu'**il comprend
une deuxième portion inclinée (23), la première portion inclinée (22) et la deuxième portion inclinée (23) sont respectivement situées sur les côtés gauche et droit du corps principal (21), la première portion inclinée (22) et la deuxième portion inclinée (23) sont toutes deux reliées de manière fixe au corps principal (21), et les côtés supérieurs de la première portion inclinée (22) et de la deuxième portion inclinée (23) sont tous deux plus hauts qu'un côté supérieur du corps principal (21);
dans lequel la structure d'homogénéisation de lumière (3) comprend une première portion d'homogénéisation de lumière (31), une deuxième portion d'homogénéisation de lumière (32) et une troisième portion d'homogénéisation de lumière (33), la première portion d'homogénéisation de lumière (31) et la troisième portion d'homogénéisation de lumière (33) sont respectivement situées sur les côtés gauche et droit de la deuxième portion d'homogénéisation de lumière (32), et la première portion d'homogénéisation de lumière (31) et la troisième portion d'homogénéisation de lumière (33) sont toutes deux reliés de manière fixe à la deuxième portion d'homogénéisation de lumière (32);
dans lequel la première portion d'homogénéisation de lumière (31) est configurée pour diverger la lumière des sources lumineuses (1) vers la première portion inclinée (22), la troisième portion d'homogénéisation de lumière (33) est configurée pour diverger la lumière des sources lumineuses (1) vers la deuxième portion inclinée (23), et la deuxième portion d'homogénéisation de lumière (32) est configurée pour diverger la lumière des sources lumineuses (1) vers le corps principal (21);
dans lequel la première portion d'homogénéisation de lumière (31) comprend une pluralité de premières unités d'homogénéisation de lumière (34), et la pluralité des premières unités d'homogénéisation de lumière (34) sont successivement reliées bout à bout, dans lequel chacune des premières unités d'homogénéisation de lumière (34) comprend une première surface de liaison (341), une première surface incidente de lumière (342), une deuxième surface incidente de lumière (343), une troisième surface incidente de lumière (344), une deuxième surface de liaison (345) et une première surface réfléchissante (346); la première surface de liaison (341), la première surface incidente de lumière (342), la deuxième surface incidente de lumière (343), la troisième surface incidente de lumière (344), la deuxième surface de liaison (345) et la première surface réfléchissante (346) sont reliées dans un ordre de gauche à droite; et dans lequel la première surface incidente de lumière (342) et la deuxième surface de liaison (345) sont toutes deux des surfaces horizontales, et la première surface de liaison (341), la deuxième surface incidente de lumière (343), la troisième surface incidente de lumière (344) et la première surface réfléchissante (346) sont toutes des surfaces inclinées; la deuxième surface incidente de lumière (343) et la troisième surface incidente de lumière (344) sont inclinées dans des directions opposées, et la deuxième surface incidente de lumière (343) et la troisième surface incidente de lumière (344) sont reliées par l'intermédiaire d'une surface en arc en retrait éloignée de la source lumineuse (1); la première surface de liaison (341) et la troisième surface incidente de lumière (344) sont inclinées dans la même direction, et la première surface réfléchissante (346) et la deuxième surface incidente de lumière (343) sont inclinées dans la même direction.

2. Dispositif de guidage de lumière selon la revendication 1, **caractérisé en ce que** quelconque première surface réfléchissante (346) d'une première unité d'homogénéisation de lumière (34) précédente est reliée à la première surface de liaison (341) de la première unité d'homogénéisation de lumière (34) suivante par l'intermédiaire d'une première surface horizontale (347); et la première surface réfléchissante (346), la première surface horizontale (347) et la première surface de liaison (341) forment une structure en retrait vers le corps principal (21).

3. Dispositif de guidage de lumière selon la revendication 1, **caractérisé en ce que** la troisième portion d'homogénéisation de lumière (33) comprend une pluralité de troisièmes unités d'homogénéisation de lumière (35), et la pluralité des troisièmes unités d'homogénéisation de lumière (35) sont successivement reliées bout à bout, dans lequel chacune des troisièmes unités d'homogénéisation de lumière (35) comprend une troisième surface de liaison (351), une quatrième surface incidente de lumière (352), une cinquième surface incidente de lumière (353), une sixième surface incidente de lumière (354), une quatrième surface de liaison (355) et une deuxième surface réfléchissante (356); la troisième surface de liaison (351), la quatrième surface incidente de lumière (352), la cinquième surface incidente de lumière (353), la sixième surface incidente de lumière (354), la quatrième surface de liaison (355) et la deuxième surface réfléchissante (356) sont reliées dans un ordre de droite à gauche.

4. Dispositif de guidage de lumière selon la revendication 3, **caractérisé en ce que** la quatrième surface incidente de lumière (352) et la quatrième surface de liaison (355) sont toutes deux des surfaces horizontales, et que la troisième surface de liaison (351), la cinquième surface incidente de lumière (353), la sixième surface incidente de lumière (354) et la deuxième surface réfléchissante (356) sont toutes des surfaces inclinées; la cinquième surface incidente de lumière (353) et la sixième surface incidente de lumière (354) sont inclinées dans des directions opposées, et la cinquième surface incidente de lumière (353) et la sixième surface incidente de lumière (354) sont reliées par l'intermédiaire d'une surface en arc en retrait éloignée de la source lumineuse (1); la troisième surface de liaison (351) et la sixième surface incidente de lumière (354) sont inclinées dans la même direction, et la deuxième surface réfléchissante (356) et la cinquième surface incidente de lumière (353) sont inclinées dans la même direction.

5. Dispositif de guidage de lumière selon la revendication 4, **caractérisé en ce que** la deuxième surface réfléchissante (356) de quelconque troisième unité d'homogénéisation de lumière (35) précédente est reliée à la troisième surface de liaison (351) de la troisième unité d'homogénéisation de lumière (35) suivante par l'intermédiaire d'une deuxième surface horizontale (357); et la deuxième surface réfléchissante (356), la deuxième surface horizontale (357) et la troisième surface de liaison (351) forment une structure en retrait vers le corps principal (21).

6. Dispositif de guidage de lumière selon la revendication 4, **caractérisé en ce que** la première portion inclinée (22) et la première surface de liaison (341) sont inclinées dans la même direction, la deuxième portion inclinée (23) et la troisième surface de liaison (351) sont inclinées dans la même direction, et la première surface de liaison (341) et la troisième surface de liaison (351) sont inclinées dans des directions opposées.

7. Dispositif de guidage de lumière selon la revendication 6, **caractérisé en ce que** la première surface de liaison (341) et la troisième surface de liaison (351) forment chacune un angle A avec le plan de référence Y, et la première portion inclinée (22) et la deuxième portion inclinée (23) forment chacune un angle B avec le plan de référence Y, dans lequel l'angle A est supérieur à l'angle B.

8. Dispositif de guidage de lumière selon la revendication 4, **caractérisé en ce que** la troisième surface incidente de lumière (344) et la sixième surface incidente de lumière (354) forment chacune un angle C avec le plan de référence Y, et la première surface réfléchissante (346) et la deuxième surface réfléchissante (356) forment chacune un angle D avec le plan de référence Y, dans lequel l'angle C est supérieur à l'angle D; la première surface réfléchissante (346) est plus haute que la troisième surface incidente de lumière (344), et la deuxième surface réfléchissante (356) est plus haute que la sixième surface incidente de lumière (354).

9. Dispositif de guidage de lumière selon la revendication 1, **caractérisé en ce qu'**une surface latérale avant de la structure d'homogénéisation de lumière (3) est pourvue d'un motif de diffusion (4).

10. Dispositif de guidage de lumière selon la revendication 1, **caractérisé en ce qu'**une couche d'homogénéisation est prévue en outre entre la structure d'homogénéisation de lumière (3) et les sources lumineuses (1).

11. Système de sortie de lumière, **caractérisé en ce qu'**il comprend une plaque arrière et le dispositif de guidage de lumière selon l'une quelconque des revendications 1 à 10, dans lequel la plaque arrière est reliée à la plaque de guidage de lumière.
